(19) Europäisches Patentamt / European Patent Office / Office européen des brevets

(11) **EP 1 423 865 B1**

(12) **EUROPÄISCHE PATENTSCHRIFT**

(45) Veröffentlichungstag und Bekanntmachung des Hinweises auf die Patenterteilung:
**29.10.2008  Patentblatt 2008/44**

(21) Anmeldenummer: **02797577.0**

(22) Anmeldetag: **16.08.2002**

(51) Int Cl.:
*H01H 85/046* (2006.01)    *H01H 85/048* (2006.01)

(86) Internationale Anmeldenummer:
**PCT/EP2002/009154**

(87) Internationale Veröffentlichungsnummer:
**WO 2003/021618 (13.03.2003 Gazette 2003/11)**

(54) **VERFAHREN ZUM HERSTELLEN EINES SCHUTZBAUELEMENTS MIT EINEM EINGESTELLTEN ZEITVERHALTEN DES WÄRMEÜBERGANGS VON EINEM HEIZELEMENT ZU EINEM SCHMELZELEMENT**

METHOD FOR PRODUCING A PROTECTIVE COMPONENT USING AN ADJUSTED TIME RESPONSE OF THE THERMAL TRANSMISSION FROM A HEATING ELEMENT TO A FUSIBLE ELEMENT

PROCEDE POUR PRODUIRE UN COMPOSANT DE PROTECTION PRESENTANT UNE CARACTERISTIQUE TEMPORELLE DEFINIE DU TRANSFERT DE CHALEUR D'UN ELEMENT CHAUFFANT A UN ELEMENT FUSIBLE

(84) Benannte Vertragsstaaten:
**CH DE ES GB LI**

(30) Priorität: **30.08.2001  DE 10142091**

(43) Veröffentlichungstag der Anmeldung:
**02.06.2004  Patentblatt 2004/23**

(73) Patentinhaber: **Wickmann-Werke GmbH
58453 Witten (DE)**

(72) Erfinder:
• **RUPALLA, Manfred
58453 Witten (DE)**

• **HELL, Stephan
47259 Duisburg (DE)**
• **BAUS, Andreas
44137 Dortmund (DE)**

(74) Vertreter: **Schmidt, Frank-Michael et al
ZENZ
Patent- und Rechtsanwälte
Huyssenallee 58-64
45128 Essen (DE)**

(56) Entgegenhaltungen:
**EP-A- 0 188 695        EP-A- 0 373 350
EP-A- 0 715 328        AT-B- 383 697
DE-A- 19 704 097      GB-A- 1 521 618**

**Beschreibung**

Die Erfindung betrifft ein Verfahren zum Herstellen eines Schutzbauelements mit einem Schmelzelement und einem Heizelement, die als Schicht-Bauelemente auf der Oberseite eines Substrats aufgebracht werden, wobei das Schmelzelement so ausgebildet wird, daß ein Stromfluß zwischen seinen Anschlüssen unterbrochen wird, wenn das Schmelzelement zumindest in einem Schmelzbereich für eine vorgegebene Zeitdauer über eine vorgegebene Temperatur erwärmt wird, wobei das Schmelzelement und das Heizelement so auf dem Substrat angeordnet werden, daß von dem Heizelement erzeugte Wärme zu dem Schmelzelement transportiert und der Stromfluß durch das Schmelzelement unterbrochen wird, wenn der Stromfluß durch das Heizelement für eine vorgegebene Zeitdauer einen Schwellenwert überschreitet, wobei zur Herstellung von Anschlüssen zu dem Heizelement und dem Schmelzelement eine Leitschicht derart auf dem Substrat aufgebracht und strukturiert wird, daß das Heizelement und das Schmelzelement elektrisch in Reihe geschaltet werden.

Ein Schutzbauelement der eingangs genannten Art ist beispielsweise aus der Druckschrift DE 197 04 097 A1 bekannt. Die Druckschrift offenbart ferner die Verwendung einer Glaskeramik als Substrat anstelle des üblichen $Al_2O_3$-Substrats.

Ein anderes Schutzbauelement ist aus der EP 0 715 328 B1 bekannt. Auf der Oberseite eines Substrats, welches beispielsweise aus Aluminiumoxid besteht, wird (in Dünnschicht- oder Dickschichttechnik) eine elektrisch leitfähige Widerstandsschicht aufgebracht und in Form eines rechteckigen Widerstands strukturiert und an zwei gegenüberliegenden Seiten durch Aufbringung von Metalleitschichten mit elektrischen Kontakten versehen. Wenn der so hergestellte elektrische Widerstand R mit einem Strom I vorgegebener Größe beaufschlagt wird, wird die Verlustleistung $P = I^2 \times R$ am Ort des Widerstands- oder Heizelements in Wärme umgesetzt. Über der Widerstandsschicht wird eine elektrisch isolierende Schicht aufgebracht und über der elektrisch isolierenden Schicht ein zwischen zwei Zuleitungskontakten angeordnetes Schmelzelement erzeugt. Das Schmelzelement besteht aus einer in Form eines Streifens strukturierten leitfähigen Schicht aus einem niedrig schmelzenden Metall, wobei der Schichtstreifen an seinen Enden mit Hilfe von metallischen Leitschichten kontaktiert ist. Der Streifen der niedrig schmelzenden Metallschicht wird über dem Heizelement angeordnet, so daß die von dem Heizelement erzeugte Wärme zu dem Schmelzelement transportiert wird, wobei das niedrig schmelzende Metall schmilzt, wenn die Temperatur des Schmelzelements einen bestimmten Schwellenwert überschreitet.

Konstruktiv bedingt wird nur ein Teil der von dem Heizwiderstand erzeugten Wärme zu dem Schmelzelement transportiert; ein erheblicher Teil der erzeugten Wärme wird in das Substrat und an die Umgebung der Anordnung abgegeben. Sowohl die an das Substrat abgegebene Wärme als auch die durch die elektrisch isolierende zwischenschicht hindurch an das Schmelzelement übertragene Wärme werden zum größten Teil durch Wärmeleitung transportiert, wobei sich die Materialien, die die Wärme weiterleiten, aufheizen und eine bestimmte Wärmemenge speichern können. Aufgrund der geringen räumlichen Entfernung des Schmelzelements vom Heizelement bei der bekannten Anordnung wird die Wärme durch Wärmeleitung relativ schnell transportiert, wobei zeitliche Verzögerungen aufgrund einer Speicherung von Wärme bei der bekannten Anordnung nicht näher betrachtet werden.

Im Stand der Technik ist es ferner bekannt, Schutzbauelemente, insbesondere Sicherungsbauelemente, herzustellen, die bei vorgegebenen Strömen nach vorgegebenen Zeiten den Stromfluß unterbrechen. Bei sehr hohen Strömen soll die Unterbrechung innerhalb kürzester Zeit geschehen (flink). Dabei wird bei Sicherungsbauelementen, bei denen das Heizelement und das Schmelzelement in Reihe geschaltet sind, der Stromfluß vorzugsweise durch Zerstörung der Widerstandsschicht des Heizelements unterbrochen. Wird das Sicherungsbauelement für eine relativ lange Zeit mit einem Strom beaufschlagt und dieser Strom nur langsam erhöht, so wird das Sicherungsbauelement durch Aufschmelzen und Unterbrechung des Schmelzelements abgeschaltet, wenn der Strom einen vorgegebenen Schwellenwert überschreitet. Dieser Minimalstrom, der das Bauelement gerade noch nach längerer Beaufschlagung unterbricht, entspricht dem Grenzstrom des Sicherungsbauelements. Bei Strömen durch das Sicherungsbauelement, die einen Betrag oberhalb des Grenzstroms bis zu einigen Mehrfachen des Grenzstroms haben, die aber nur relativ kurze Zeit fließen, wird das Sicherungsbauelement nach jeweils bestimmten Zeiten durch Unterbrechen des Schmelzelements ausgelöst. Derartige Sicherungsbauelemente werden üblicherweise durch eine Zeit-Strom-Kennlinie charakterisiert, die für das Bauelement angibt, nach welchen Zeiten bei welchen (sprunghaft angelegten) Strömen es zu einer Unterbrechung des Bauelements kommt.

Aufgabe der Erfindung ist es, ein Verfahren zum Herstellen eines Schutzbauelements der eingangs genannten Art zu schaffen, bei dem die Zeit-Strom-Kennlinie, insbesondere im Bereich oberhalb des Grenzstroms bis hin zu einigen Mehrfachen des Grenzstroms, besser eingestellt werden kann.

Diese Aufgabe wird erfindungsgemäß durch ein Verfahren zum Herstellen eines Schutzbauelements mit den Merkmalen des Patentanspruchs 1 beziehungsweise des Patentanspruchs 7 gelöst.

Dabei ist zu berücksichtigen, daß es aus der EP 0 188 695 A1 bekannt ist, zwischen einen Heizelement und einem temperaturabhängigen Schalter eine zusätzliche Wärmekapazität anzuordnen.

Unter einem Schutzbauelement im Sinne der Erfindung soll sowohl ein Sicherungsbauelement mit einem in der Regel geringen elektrischen Widerstand als auch ein Sicherungswiderstand mit einem vorgegebenen elektrischen Widerstand verstanden werden. Unter einem Schicht-Bauelement soll sowohl ein in Dünnschichttechnik (beispielsweise Aufdampfen, Aufsputtern, Abscheidung aus der Gasphase) als auch in Dickschichttechnik (beispielsweise durch Siebdruck) hergestelltes Bauelement verstanden werden, wobei in Abhängigkeit von der verwendeten Technologie die Schicht bereits beim Aufbringen (z. B. Siebdruck) oder nach einer ganzflächigen Aufbringung (z. B. durch photolithografische Techniken) strukturiert wird. Die Unterbrechung des Stromflusses des Schmelzelements braucht nicht zwangsläufig allein darauf zu beruhen, daß das Material in dem Schmelzbereich schmilzt und sich aufgrund der Oberflächenspannung zusammenzieht und dabei eine Lücke zwischen den Anschlüssen bildet. Vielmehr wird in der Regel ein Schmelzelement verwendet, bei dem durch Wechselwirkung einer ein geschmolzenes Metall enthaltenden Schicht mit einer darunter angeordneten elektrisch leitfähigen Schicht, beispielsweise durch Legierungsbildung, die elektrisch leitfähige Schicht aufgelöst und unterbrochen wird. Der Schmelzbereich ist somit derjenige Teilbereich bzw. diejenige Fläche des Schichtbauelements, an der der Stromfluß aufgrund des Schmelzens zumindest einer Komponente des Schmelzelements unterbrochen wird. Das Schutzbauelement kann auch mehrere um das Schmelzelement herum angeordnete Heizelemente aufweisen.

Der Stromfluß durch das Schmelzelement wird unterbrochen, wenn der Stromfluß durch das Heizelement für eine vorgegebene Zeitdauer einen Schwellenwert überschreitet. Die Ströme brauchen nicht identisch zu sein; eine beliebige Beschaltung und/oder Kontaktierung ist möglich. Die vorgegebene Zeitdauer ist jeweils einem Schwellenwert des Stroms zugeordnet. Es gibt aber eine unbeschränkte Anzahl von Zeitdauer-Schwellenwert-Paaren, die zusammen eine Zeit-Strom-Kennlinie des Schutzbauelements bilden.

Die Erfindung basiert auf der Grunderkenntnis, daß das Zeitverhalten bzw. Abschaltverhalten (Zeit-Strom-Kennlinie) des Schutzbauelements entscheidend von der lokalen Wärmekapazität des Heizelements beziehungsweise von den auf dem Weg der Wärmeausbreitung vom Heizelement zum Schmelzelement angeordneten lokalen Wärmekapazitäten abhängt. Insbesondere wird die Zeit-Strom-Kennlinie für Ströme oberhalb des Grenzstroms bis hin zu Mehrfachen des Grenzstroms (z. B. dem Zehnfachen des Grenzstroms) von diesen Wärmekapazitäten bestimmt. Der auf dieser Grunderkenntnis basierende Grundgedanke des erfindungsgemäßen Herstellungsverfahrens ist die gezielte Einstellung des Abstands zwischen dem Heizelement und dem Schmelzelement sowie der am Heizelement bzw. an einem vorgegebenen Ort zwischen dem Heizelement und dem Schmelzelement angeordneten lokalen Wärmekapazitäten durch gezielte Variation des Layouts und der Schichtfolge des Bauelements.

Bei der Erfindung wird durch die Einstellung eines vorgegebenen Abstands zwischen dem Heizelement und dem Schmelzelement näherungsweise ein vorgegebener Wärmeleitwiderstand eingestellt. In Verbindung mit der am Heizelements eingestellten lokalen Wärmekapazität ergibt sich eine bestimmte Zeitkonstante der Wärmeübertragung vom Heiz- zum Schmelzelement.

Ähnliches gilt für das Anordnen lokaler Wärmekapazitäten an vorgegebenen Orten zwischen dem Heizelement und dem Schmelzelement. Von dem Heizelement zu dem vorgegebenen Ort der lokalen Wärmekapazität ergibt sich aus dem Abstand ein bestimmter Wärmeleitwiderstand; ein weiterer Wärmeleitwiderstand ergibt sich aus dem Abstand des vorgegebenen Ortes zum Schmelzelement. Auch hier läßt sich durch Einstellung der lokalen Wärmekapazität eine vorgegebene Zeitkonstante einstellen. Die Zeitkonstante ist näherungsweise proportional dem Produkt aus einem effektiven Wärmeleitwiderstand, der mit dem Abstand von Heizelement und Schmelzelement zunimmt, und der lokalen Wärmekapazität. Durch die gezielte Einstellung einer oder mehrerer lokaler Wärmekapazitäten in vorgegebenen Abständen zu dem Heizelement und dem Schmelzelement lassen sich gezielt eine oder mehrere Zeitkonstanten einstellen, die das Zeitverhalten des Wärmeübergangs und somit die Zeit-Strom-Kennlinie des Schutzbauelements definieren.

Bei einer Ausführungsform des erfindungsgemäßen Verfahrens wird die vorgegebene lokale Wärmekapazität des Heizelements eingestellt, indem bei vorgegebenem Schichtmaterial und vorgegebener Schichtdicke des Heizelements die Fläche des Heizelements eingestellt wird. Die Fläche des Heizelements bestimmt das an das Heizelement unmittelbar angekoppelte Teilvolumen des Substrats, das heißt das Segment des Substrats, daß die von dem Heizelement erzeugte Wärme unmittelbar, das heißt ohne wesentliche zeitliche Verzögerung, aufnimmt. Selbstverständlich findet in dem Substrat ein Weitertransport der Wärme statt, welcher Zeit beansprucht. Diese Verkettung von Wärmeleitung und Wärmespeicherung im Substrat läßt sich jedoch derart modellieren, daß sich unmittelbar am Heizelement eine Wärmekapazität ergibt, die von der dem Heizelement zugeführten Heizleistung beaufschlagt wird. Diese lokale Wärmekapazität ist näherungsweise zu der Fläche des Heizelements proportional. Bei einer Ausführungsform kann die Fläche des Heizelements eingestellt werden, indem die Länge und die Breite eines rechteckigen Heizelements um den gleichen Faktor erhöht oder verringert werden. Dadurch bleibt der elektrische Widerstand des an den Stirnseiten kontaktierten Heizelements im wesentlichen unverändert. Alternativ kann die Fläche des rechteckigen Heizelements eingestellt werden, indem lediglich dessen Länge verändert wird. Dadurch ergibt sich ein gleichbleibender Querschnitt für den Stromfluß. Bei einer Reihenschaltung von Schmelz- und Heizelement, bei der das Heizelement so ausgebildet wird, daß es bei hohen Strömen vor dem Schmelzelement anspricht und den Stromfluß unterbricht, kann damit ein näherungsweise gleichbleibendes Abschaltverhalten bei den hohen Strömen erreicht werden.

Bei einer alternativen Ausführungsform wird die lokale Wärmekapazität des Heizelements eingestellt, indem bei vorgegebener Fläche des Heizelements die Schichtdicke des Heizelements eingestellt wird und/oder das Material der Schicht des Heizelements geändert wird. Zusätzlich kann bei gleichbleibender Fläche des Heizelements das Verhältnis seiner Länge zu seiner Breite verändert werden, um bei veränderter Schicht die elektrischen Parameter konstant zu halten. Bei der Herstellung des Heizelements können mehrere verschiedenartige Widerstandsschichten übereinander aufgebracht werden, deren Schichtdicken und -materialien so ausgewählt werden, daß sich eine vorgegebene lokale Wärmekapazität ergibt. Bei dieser Ausführungsform wird die lokale Wärmekapazität (d. h. das Wärmespeichervermögen) der Schicht des Heizelements selbst eingestellt. Zu dieser eingestellten lokalen Wärmekapazität der Heizelementschicht kommt selbstverständlich noch die (bei dieser Ausführungsform nicht gezielt eingestellte) lokale Wärmekapazität des Substratmaterials am Heizelement hinzu.

Bevorzugte und/oder vorteilhafte Weiterbildungen der Erfindung sind in den Unteransprüchen gekennzeichnet.

Im folgenden wird die Erfindung anhand bevorzugter Ausführungsformen beschrieben, die in den Zeichnungen dargestellt sind. In den Zeichnungen zeigen:

Figur 1 eine Prinzipdarstellung des Layouts eines nach dem erfindungsgemäßen Verfahren hergestellten Schutzbauelements;

Figuren 2A und 2B Prinzipdarstellungen der Anordnung von Heizelement und Schmelzelement auf dem Substrat mit einem vereinfachten thermischen Ersatzschaltbild bei sich ändernder Fläche des Heizelements; und

Figur 3 eine Prinzipdarstellung des Schutzbauelements mit dem auf dem Substrat aufgebrachten Heizelement und Schmelzelement sowie einer dazwischen angeordneten zusätzlichen lokalen Wärmekapazität sowie einem zugehörigen thermischen Ersatzschaltbild.

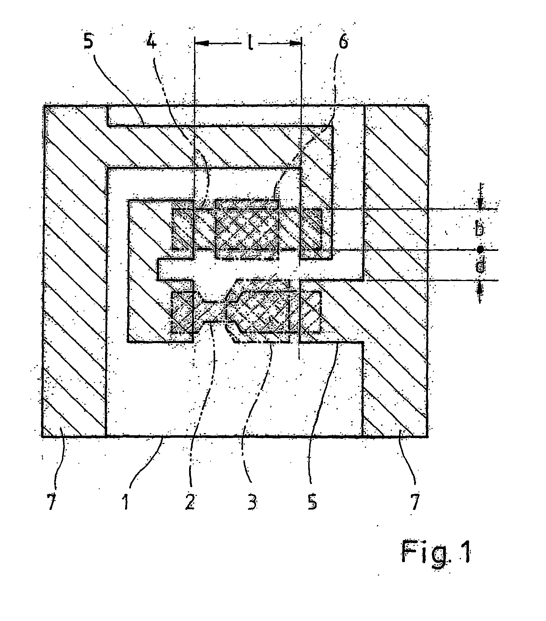

Figur 1 zeigt eine Prinzipdarstellung des Layouts eines beispielhaften Schutzbauelements. Auf einem Substrat 1 sind mit Hilfe einer Dünnschichttechnik oder einer Dickschichttechnik mehrere Schichten aufgebracht und derart strukturiert, daß sie die Reihenschaltung eines Heizelements und Schmelzelements mit zugehörigen Kontakten ergeben. Das Substrat 1 ist vorzugsweise Teil eines größeren Substrats (beispielsweise eines Wafers), auf dem gleichzeitig eine Vielzahl von gleichartigen Schutzbauelementen hergestellt werden, wobei nach der Fertigstellung der Schichten der Schutzbauelemente das Substrat in die Substrat-Chips 1 zerteilt wird. Das Substrat 1 besteht vorzugsweise aus einem elektrisch isolierenden Material; alternativ kann auch ein Mehrschichtaufbau verwendet werden, dessen oberste Schicht elektrisch isolierend ist. Als Substratmaterial kommt beispielsweise Aluminiumoxid in Frage. Alternativ kann beispielsweise eine Glaskeramik verwendet werden, die eine gegenüber Aluminiumoxid deutlich geringere Wärmeleitfähigkeit, aber eine vergleichbare Wärmekapazität aufweist.

Auf dem in Figur 1 dargestellten Substrat befindet sich ein Schmelzelement, das aus einer auf dem Substrat aufliegenden leitfähigen Schicht 2 und einer darüber aufgebrachten Schicht 3, die ein niedrig schmelzendes Metall enthält, besteht. Die leitfähige Schicht 2 besteht beispielsweise aus Silber und/oder Palladium und kann sowohl in einer Dünnschichttechnik als auch einer Dickschichttechnik aufgebracht werden, wobei ihre Dicke beispielsweise etwa 1 $\mu$m beträgt. Die das niedrig schmelzende Metall enthaltende Schicht besteht beispielsweise aus Zinnpulver in einem organischen Bindemittel. Als niedrig schmelzende Metalle können ferner Wismuth, Blei und/oder Zinn enthaltende Legierungen verwendet werden. Zwischen der relativ dünnen elektrisch leitfähigen Schicht 2 und der ein niedrig schmelzendes Metall enthaltenden Schicht 3 des Schmelzelements kann eine schmelzbare Trennschicht vorgesehen sein, die die Partikel des niedrig schmelzenden Metalls von dem Metall der Schicht 2 trennt.

Auf dem Substrat 1 ist ferner eine Widerstandsschicht 4 aufgebracht, aus der das Heizelement gebildet wird. Die Widerstandsschicht 4 besteht aus einem Material mit einem vorgegebenen spezifischen Widerstand. Die einander gegenüberliegenden Enden der leitfähigen Schicht 2 des Schmelzelements und die einander gegenüberliegenden Enden der Widerstandsschicht 4 sind mit Hilfe einer darüber aufgebrachten Leitschicht 5 eines elektrisch gut leitenden Metalls kontaktiert. Unter Vernachlässigung der Kontakteinflüsse ergibt sich für den elektrischen Widerstand R des Heizelements näherungsweise:

$$R = \rho \cdot \frac{l}{b \cdot D_{Heiz}} \text{, wobei l die Länge der}$$

Widerstandsschicht 4 zwischen den Kontakten zu der Leitschicht 5, b die Breite des Streifens der Widerstandsschicht 4, $D_{Heiz}$ die Dicke der Widerstandsschicht 4 und p der spezifische Widerstand der Widerstandsschicht ist. Wenn somit durch das Heizelement mit dem Widerstand R ein Strom I fließt, so wird im Widerstand die Leistung $P = I^2R$ in Wärme umgesetzt.

Die Widerstandsschicht 4 ist vorzugsweise so ausgebildet, daß dann, wenn der Strom I durch die Widerstandsschicht einen bestimmten Schwellenwert überschreitet, die Widerstandsschicht selbst derart verändert wird, daß der Stromfluß unterbrochen wird. Dieser Schwellenwert des Stroms liegt allerdings erheblich höher als derjenige Strom, bei dem aufgrund der erzeugten Wärme das Schmelzelement anspricht und den Stromfluß unterbricht. Deshalb kann diese Unterbrechungsfunktion der Widerstandsschicht nur bei Stromspitzen auftreten, die derart kurzzeitig sind, daß die Erwärmung des Schmelzelements noch nicht ausreicht, um dieses zu unterbrechen.

Bei dem in Figur 1 dargestellten Ausführungsbeispiel ist über oder unter der Widerstandsschicht 4 eine zusätzliche Wärmespeicherschicht 6 aufgebracht. Dieses kann bei einem alternativen Ausführungsbeispiel auch unter der Widerstandsschicht 4 aufgebracht werden. Die Wärmespeicherschicht 6 besteht vorzugsweise aus einem Material relativ hoher spezifischer Wärmekapazität.

Die Ausbildung der Kontakte zum Anschließen des Schutzbauelements ist in Figur 1 nicht näher dargestellt. In Figur 1 sind lediglich an den gegenüberliegenden Seiten des Substrats 1 Kontaktflächen 7 dargestellt, die aus der leitfähigen Schicht 5 gebildet sind. Vorzugsweise wird auf den Kontaktflächen sowie um den Rand des Substrats 1 umgreifend auch auf der Unterseite des Substrats 1 ein Überzug aus einem leitfähigen Material gebildet, so daß ein Bauteil gebildet wird, daß durch Oberflächenmontage auf eine Schaltungsplatine montiert werden kann (SMD-Bauteil). Das SMD-Bauteil wird an seinen beiden Enden, die die Kontaktflächen 7 aufweisen, mit Hilfe eines Lots an der darunter angeordneten Schaltungsplatine befestigt.

Im folgenden soll die Funktion des in Figur 1 dargestellten Schutzbauelements näher erläutert werden. Wenn die Reihenschaltung des die Widerstandsschicht 4 aufweisenden Heizelements und des die Schichten 2 und 3 aufweisenden Schmelzelements über die Kontaktflächen 7.mit einem Strom beaufschlagt wird, so fällt aufgrund des elektrischen Widerstands der verwendeten Schichten sowohl über der Widerstandsschicht 4 als auch über der leitfähigen Schicht 2 des Schmelzelements und über den Zuleitungen der Leitschicht 5 jeweils eine Spannung ab. Aufgrund des Spannungsabfalls wird in den Schaltungselementen eine elektrische Leistung $P = U \times I$ in Wärme umgesetzt. Das Material und die Schichtdicke der Leitschicht 5 sind dabei so gewählt, daß über diesen Leitbahnen nur eine sehr geringe Spannung abfällt. Die Schichten des Schmelzelements und des Widerstandsheizelements sind vorzugsweise so ausgebildet, daß der Widerstand des Heizelements mindestens eine Größenordnung höher ist als der des Schmelzelements, so daß der größte Teil der im Schutzbauelement umgesetzten Leistung über der Widerstandsschicht 4 des Heizelements abfällt. In der Widerstandsschicht 4 des Heizelements wird somit eine dem Quadrat des Stromes I proportionale Wärmeleistung $P_{th}$ erzeugt.

Wird ein Strom I vorgegebener Größe sprunghaft angelegt (das heißt ein Anstieg von Null auf I innerhalb kürzester Zeit), so führt die zugeführte Leistung $P_{th}$ zunächst zu einer Erwärmung der Widerstandsschicht 4 selbst. Die Gleichmäßigkeit der Erwärmung der Widerstandsschicht hängt von der Stromdichteverteilung des Stromflusses innerhalb dieser Schicht ab. Die in der Widerstandsschicht 4 erzeugte Wärme wird dann mittels Wärmeleitung zu den darunterliegenden, darüberliegenden und/oder angrenzenden Schichten transportiert; bei fehlender Wärmespeicherschicht 6 wird der größte Teil der in der Widerstandsschicht 4 erzeugten Wärme mittels Wärmeleitung in das darunterliegende Substratmaterial abgegeben. Es heizen sich zunächst die unmittelbar angrenzenden Substratschichten auf. Anschließend dringt die Wärme tiefer in das Substrat ein und breitet sich seitlich aus, wobei die Geschwindigkeit der Wärmeausbreitung sowohl von der Wärmeleitfähigkeit des Materials als auch von dessen spezifischer Wärmekapazität abhängig ist. Wenn über der Widerstandsschicht 4 eine zusätzliche Wärmespeicherschicht 6 angeordnet ist, so wird in diese ein Teil der in der Widerstandsschicht 4 erzeugten Wärme abgeleitet, bis sich die Wärmespeicherschicht 6 auf die Temperatur der Widerstandsschicht erwärmt hat. Ein Teil der in der Widerstandsschicht erzeugten Wärme wird über die Kontakte an die Leitschicht 5 der Zuleitungen abgegeben. Ein weiterer Teil der Wärme wird selbstverständlich durch Wärmeleitung, Wärmestrahlung und/oder Konvektion an die Umgebung abgegeben.

Ein Teil der sich in dem Substrat 1 ausbreitenden Wärme gelangt in den Substratbereich unterhalb der Schichten 2 und 3 des Schmelzelements. Ausgehend von dem Substrat 1 werden dann die Schichten 2 und 3 des Schmelzelements erwärmt.

Nach einer von den Layouts der verwendeten Schichten, den Schichtdicken und den verwendeten Materialien sowie von dem Material des Substrats 1 abhängigen Zeit hat sich nach dem sprunghaften Anlegen des Stroms I ein stationärer Zustand der Temperaturverteilung auf dem Schutzbauelement eingestellt (selbstverständlich wird hierbei vorausgesetzt, daß die Umgebungsbedingungen konstant bleiben). Das Einschwingverhalten bis zum Erreichen des stationären Zustands der Temperaturverteilung entspricht dem eines (gegebenenfalls mehrgliedrigen) Tiefpasses. (in elektrischer Analogiebetrachtung), wobei dem Einschwingverhalten eine oder mehrere Zeitkonstanten zugeordnet werden können. Gemäß dem erfindungsgemäßen Verfahren werden diese Zeitkonstanten durch entsprechende Dimensionierung des Layouts und der Schichten gezielt eingestellt.

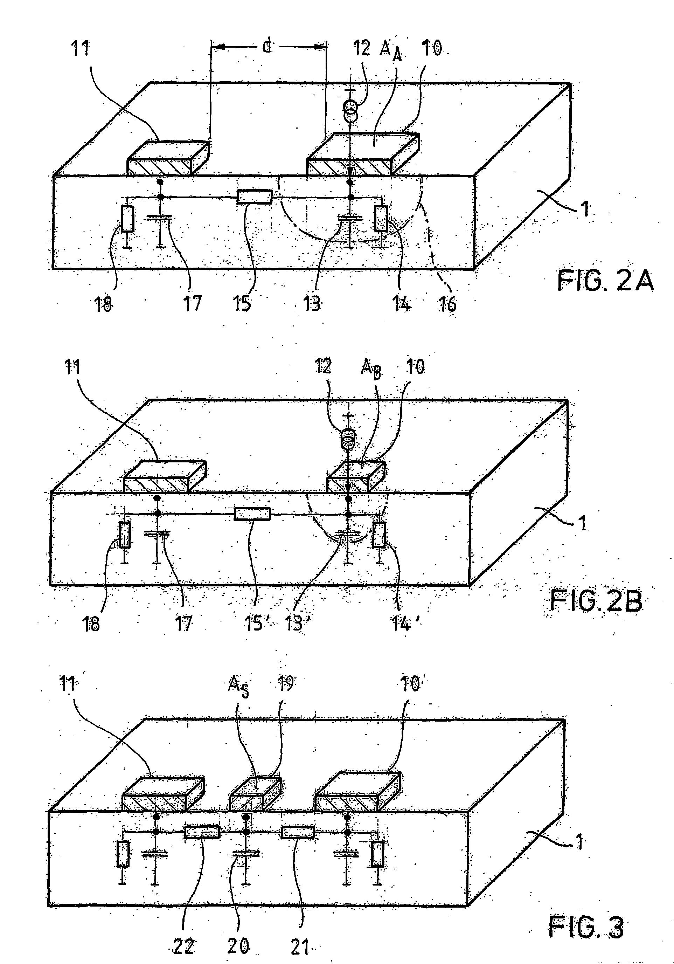

In den Figuren 2A und 2B sind die Anordnungen eines Heizelements 10 und eines Schmelzelements 11 auf einem Substrat 1 zusammen mit einem stark vereinfachten thermischen Ersatzschaltbild, das die thermische Kopplung der beiden Elemente über das Substrat 1 veranschaulicht, schematisch dargestellt. Wie bereits erwähnt, führt das Fließen eines Stromes I durch das Heizelement 10 mit dem Widerstand R zur Erzeugung einer thermischen Leistung $P_{th}$ innerhalb des Heizelements 10. Die zugeführte Leistung kann in dem thermischen Ersatzschaltbild durch eine Stromquelle 12 dargestellt werden. Die dem Heizelement 10 zugeführte Heizleistung $P_{th}$ führt zu einer Erwärmung des Heizelements 10 selbst sowie unmittelbar zu einer Erwärmung des unter dem Heizelement befindlichen Substratsegments. Die Wärmezufuhr ist über die Fläche des Heizelements 10 näherungsweise gleichmäßig verteilt (sofern auch die Stromdichte des durch das Heizelement 10 fließenden Stromes gleichmäßig verteilt ist). Wenn sprunghaft eine Heizleistung in dem Heizelement 10 erzeugt wird, werden zunächst die obersten Schichten des Substrats 1 und dann durch Ableitung der Wärme darunterliegende Schichten und seitlich angrenzende Schichten des Substrats erwärmt. Diese Verkettung von Weiterleitung und Wärmespeicherung kann in einem Modell vereinfacht durch eine Wärmekapazität 13 mit parallel geschalteten Wärmewiderstand sowie (sofern nur die Wärmeleitung in Richtung des Schmelzelements betrachtet werden soll) einen weiteren Wärmewiderstand 15 nachgebildet werden. Die Wärmekapazität 13 des von der Wärmezufuhr beaufschlagten Substratsegments entspricht beispielsweise einem Volumenbereich 16, der in Figur 2A durch eine gestrichelte Linie 16 dargestellt ist. Die im Modell dargestellte Wärmekapazität 13 verkörpert somit die Wärmekapazität der Schicht des Heizelements 10 selbst zuzüglich der Wärmekapazität des effektiv wirksamen Substratsegments 16. Die thermischen Eigenschaften des Schmelzelements 11 können wiederum durch eine Wärmekapazität 17 und einen parallel angeordneten Wärmewiderstand 18 nachgebildet werden. Die Größe des Wärmewiderstands 15 für die Wärmeleitung zwischen dem Heizelement 10 und dem Schmelzelement 11 wird unter anderem von dem Abstand d zwischen dem Heizelement 10 und dem Schmelzelement 11 bestimmt. Aus dem gezeigten Wärmeersatzschaltbild wird deutlich, daß die Zeitkonstanten des Wärmeübergangs vom Heizelement 10 zum Schmelzelement 11 und somit die Zeitabhängigkeit des Ansprechens des Schmelzelements 11 aufgrund seiner Erwärmung vorrangig von der lokalen Wärmekapazität 13 am Heizelement 10, dem thermischen Widerstand 15 und der lokalen Wärmekapazität 17 des Schmelzelements 11 bestimmt werden. Diese Größen sind stark von der Dimensionierung des Layouts und der Schichtdicken sowie von der Wahl der Materialien abhängig. Der Wärmewiderstand 15 wird stark vom Abstand d zwischen Heizelement 10 und Schmelzelement 11 und die Wärmekapazität 13 von der Fläche $A_A$ des Heizelements 10 beeinflußt. Die Beeinflussung der Wärmekapazität 13 durch die Einstellung der Fläche A des Heizelements 10 ist anhand der Figuren 2A und 2B dargestellt. In Figur 2B ist die Fläche $A_B$ des Heizelements 10 reduziert. Der Abstand d zwischen Heizelement 10 und Schmelzelement 11 ist näherungsweise konstant gehalten. Dies führt zu einer deutlich geringeren Wärmekapazität 13' bei geringfügig geändertem Wärmewiderstand 15', was zu einer deutlich geringeren Zeitkonstante führt. Bei sonst gleichen Dimensionierungen, gleichen elektrischen Parametern und gleicher zugeführter Heizleistung 12 zeigt das in Figur 2B skizzierte Schutzbauelement gegenüber dem in Figur 2A gezeigten ein schnelleres Ansprechen, das heißt eine bei Mehrfachen des Grenzstroms stärker abgeflachte Zeit-Strom-Kennlinie.

Figur 3 zeigt eine alternative Möglichkeit, die Zeitkonstanten des Ansprechens des Schutzbauelements einzustellen. Bei dem in Figur 3 skizzierten Schutzbauelements ist zwischen dem Heizelement 10 und dem Schmelzelement 11 auf der Oberfläche des Substrats 1 ein zusätzlicher Wärmespeicher in Form einer strukturierten Wärmespeicherschicht 19 aufgebracht. Im Wärmeersatzschaltbild ist diese Wärmespeicherschicht 19 durch die Kapazität 20 dargestellt, wobei der Wärmeleitwiderstand zwischen Heizelement 10 und Schmelzelement 11 in die beiden Widerstände 21 und 22 aufgeteilt wird. Die Wärmespeicherschicht 19 schafft eine zusätzliche Verzögerung der Wärmeausbreitung vom Heizelement 10 zum Schmelzelement 11 und somit ein trägeres Ansprechen des Schutzbauelements. Die lokale Wärmekapazität 20 der Wärmespeicherschicht 19 wird durch die Fläche $A_S$ der Speicherschicht und deren Dicke sowie durch die Materialauswahl (spezifische Wärmekapazität) eingestellt.

Im Rahmen des Erfindungsgedankens sind zahlreiche alternative Ausführungsformen denkbar. Anstelle einer rechteckig strukturierten Widerstandsschicht 4 des Heizelements 10 können mehrere und beliebig geformte Heizelemente verwendet werden. Die Heizelemente 10 können beispielsweise um das Schmelzelement 11 herum angeordnet werden. Anstelle eines Schmelzelements können auch mehrere unterschiedlich ansprechende Schmelzelemente in unterschiedlichen Abständen zu dem Heizelement angeordnet werden. Heizelement und Schmelzelement brauchen nicht in Reihe geschaltet zu werden; sie können separaten Außenkontakten zugeordnet sein, wobei die Außenkontakte in verschiedene Schaltungen eingebunden sein können.

Wenn das Schutzbauelement als.Sicherungsbauelement verwendet werden soll, wird die Reihenschaltung von Heizelement und Schmelzelement vorzugsweise so dimensioniert, daß sich ein geringer elektrischer Widerstand ergibt. Selbstverständlich muß der elektrische Widerstand des Heizelements ausreichend groß sein, damit die erforderliche Heizleistung dem Substrat zugeführt werden kann. Die erforderliche Heizleistung kann minimiert werden, indem das Schmelzelement näher an das Heizelement herangerückt oder sogar über diesem angeordnet wird und indem ein Substrat mit einer geringen Wärmeleitfähigkeit verwendet wird. Um dennoch eine ausreichende Trägheit zu gewährleisten, kann ein Substratmaterial mit einer hohen Wärmekapazität verwendet oder eine zusätzliche. Wärmespeicherschicht unter dem Heizelement aufgebracht werden. Bei dem Sicherungsbauelement, welches grundsätzlich eine möglichst geringe Wärmeleistung erzeugt, hätte das Substratmaterial mit schlechter Wärmeleitung zudem den Vorteil, daß die Erwärmung des Substrats, insbesondere die kurzzeitige Erwärmung des Substrats, lokal auf das Gebiet um das Heizelement und das Schmelzelement herum (hot spot) beschränkt bleibt. Dies führt zu einer geringeren Erwärmung der außen angeordneten Anschlüsse und der an die Anschlüsse angreifenden Lotverbindung und verringert somit die Gefahr des selbständigen "Auslötens" des Bauelements.

Alternativ kann das Schutzbauelement als Sicherungswiderstand ausgeführt werden, das heißt als Schutzbauelement mit einem vorgegebenen, möglichst konstantem elektrischen Widerstand. In diesem Fall wird die Reihenschaltung von Heizelement und Schmelzelement vorzugsweise so dimensioniert, daß der Gesamtwiderstand des Bauelements überwiegend vom elektrischen Widerstand des Heizelements bestimmt wird. Aus dem vorgegebenen elektrischen Widerstand des Heizelements ergibt sich zwangsläufig eine höhere Leistungsaufnahme gegenüber den Sicherungsbauelementen. Diese höhere Verlustleistung führt zu einer stärkeren Erwärmung des Bauelements. In diesem Fall wird nur ein geringerer Teil der erzeugten Wärme für die Übertragung zum Schmelzelement benötigt. Ein anderer Anteil der Wärme soll über das Substrat an die Umgebung abgeführt werden. In diesem Fall bietet sich ein Substratmaterial mit guter Wärmeleitung an. Dieses besser wärmeleitende Substratmaterial führt selbstverständlich aufgrund der schnelleren Ableitung der Wärme zu verringerten Zeitkonstanten. Um dennoch ein träges Verhalten des Schutzbauelements einzustellen, wird erfindungsgemäß eine erhöhte lokale Wärmekapazität am Heizelement (beispielsweise durch eine große Fläche des Heizelements oder durch spezielle Materialschichten unter und/oder über dem Heizelement) eingestellt. Das Zeitverhalten der Wärmeübertragung vom Heizelement zum Schmelzelement wird ferner durch die Layoutgestaltung, das heißt die Anordnung des Heizelements zum Schmelzelement, bestimmt.

**Patentansprüche**

1. Verfahren zum Herstellen eines Schutzbauelements mit einem Schmelzelement (11) und einem Heizelement (10), die als Schicht-Bauelemente auf der Oberseite eines Substrats (1) aufgebracht werden, wobei das Schmelzelement (11) so ausgebildet wird, dass ein Stromfluss zwischen seinen Anschlüssen unterbrochen wird, wenn das Schmelzelement zumindest in einem Schmelzbereich für eine vorgegebene Zeitdauer über eine vorgegebene Temperatur erwärmt wird,
wobei das Schmelzelement (11) und das Heizelement (10) so auf dem Substrat (1) angeordnet werden, dass von dem Heizelement erzeugte Wärme zu dem Schmelzelement transportiert und der Stromfluss durch das Schmelzelement unterbrochen wird, wenn der Stromfluss durch das Heizelement für eine vorgegebene Zeitdauer einen Schwellenwert überschreitet,
wobei zur Herstellung von Anschlüssen zu dem Heizelement (10) und dem Schmelzelement (11) eine Leitschicht (5) derart auf dem Substrat (1) aufgebracht und strukturiert wird, dass das Heizelement (10) und das Schmelzelement (11) elektrisch in Reihe geschaltet werden, **dadurch gekennzeichnet, daß**
das Heizelement (10) in einem vorgegebenen Abstand neben dem Schmelzelement (11) angeordnet und an zumindest einem vorgegebenen Ort zwischen dem Heizelement (10) und dem Schmelzelement (11) eine vorgegebene lokale Wärmekapazität (20), die einen Teil der sich von dem Heizelement zu dem Schmelzelement ausbreitenden Wärme speichert, eingestellt wird, indem das Layout, die Schichtdicke und das Schichtmaterial einer zusätzlichen, zwischen dem Heizelement und dem Schmelzelement angeordneten Wärmespeicherschicht mit einer gegenüber dem Substrat höheren spezifischen Wärmekapazität eingestellt werden,
so dass sich zumindest näherungsweise ein definiertes Zeitverhalten des Wärmeübergangs vom Heizelement zum Schmelzelement ergibt.

2. Verfahren nach Anspruch 1, **dadurch gekennzeichnet, dass** die vorgegebene lokale Wärmekapazität am Ort des Heizelements eingestellt wird, indem bei vorgegebener Dimensionierung des Heizelements unter der Schicht (4) des Heizelements die zusätzliche Wärmespeicherschicht (6) mit einer vorgegebenen Dicke aufgebracht wird.

3. Verfahren nach Anspruch 1, **dadurch gekennzeichnet, dass** die vorgegebene lokale Wärmekapazität am Ort des Heizelements eingestellt wird, indem bei vorgegebener Dimensionierung des Heizelements über der Schicht (4) des Heizelements die zusätzliche Wärmespeicherschicht (6) aufgebracht wird.

4. Verfahren nach Anspruch 2 oder 3, **dadurch gekennzeichnet, dass** die zusätzliche Wärmespeicherschicht (6) elektrisch leitfähig ist und dass zwischen der Wärmespeicherschicht und der Widerstandsschicht des Heizelements eine elektrische Isolatorschicht aufgebracht wird.

5. Verfahren nach Anspruch 2 oder 3, **dadurch gekennzeichnet, dass** die zusätzliche Wärmespeicherschicht über der gesamten Fläche des Substrats aufgebracht wird.

6. Verfahren nach Anspruch 1, **dadurch gekennzeichnet, dass** die vorgegebene lokale Wärmekapazität (20) eingestellt wird, indem an zumindest einem vorgegebenen Ort zwischen dem Heizelement und dem Schmelzelement die zusätzliche Wärmespeicherschicht (19) aufgebracht wird.

7. Verfahren zum Herstellen eines Schutzbauelements mit einem Schmelzelement (11) und einem Heizelement (10), die als Schicht-Bauelemente auf der Oberseite eines Substrats (1) aufgebracht werden, wobei das Schmelzelement (11) so ausgebildet wird, dass ein Stromfluss zwischen seinen Anschlüssen unterbrochen wird, wenn das Schmelzelement zumindest in einem Schmelzbereich für eine vorgegebene Zeitdauer über eine vorgegebene Temperatur erwärmt wird,
   wobei das Schmelzelement (11) und das Heizelement (10) so auf dem Substrat (1) angeordnet werden, dass von dem Heizelement erzeugte Wärme zu dem Schmelzelement transportiert und der Stromfluss durch das Schmelzelement unterbrochen wird, wenn der Stromfluss durch das Heizelement für eine vorgegebene Zeitdauer einen Schwellenwert überschreitet,
   wobei zur Herstellung von Anschlüssen zu dem Heizelement (10) und dem Schmelzelement (11) eine Leitschicht (5) derart auf dem Substrat (1) aufgebracht und strukturiert wird, dass das Heizelement (10) und das Schmelzelement (11) elektrisch in Reihe geschaltet werden, **dadurch gekennzeichnet, daß**
   das Heizelement (10) in einem vorgegebenen Abstand neben dem Schmelzelement (11) angeordnet und am Heizelement eine vorgegebene lokale Wärmekapazität (13), die einen Teil der sich von dem Heizelement zu dem Schmelzelement ausbreitenden Wärme speichert, eingestellt wird, indem das Layout, die Schichtdicke und das Schichtmaterial der Schicht des Heizelements so eingestellt werden, dass die Schicht des Heizelements bei einem vorgegebenen elektrischen Widerstand die vorgegebene lokale Wärmekapazität aufweist,
   so dass sich zumindest näherungsweise ein definiertes Zeitverhalten des Wärmeübergangs vom Heizelement zum Schmelzelement ergibt.

8. Verfahren nach Anspruch 7, **dadurch gekennzeichnet, dass** die vorgegebene lokale Wärmekapazität am Ort des Heizelements eingestellt wird, indem bei vorgegebenem Schichtmaterial und vorgegebener Schichtdicke des Heizelements die Fläche $(A_A; A_B)$ des Heizelements (10) eingestellt wird.

9. Verfahren nach Anspruch 7, **dadurch gekennzeichnet, dass** ein rechteckiges Heizelements ausgebildet wird und dass die Fläche des Heizelements eingestellt wird, indem die Länge (1) und die Breite (b) des Heizelements um den gleichen Faktor erhöht oder verringert werden.

10. Verfahren nach Anspruch 7, **dadurch gekennzeichnet, dass** ein rechteckiges Heizelement ausgebildet wird und dass die Fläche des Heizelements eingestellt wird, indem lediglich dessen Länge (1) verändert wird, wodurch sich ein gleichbleibender Querschnitt für den Stromfluss ergibt.

11. Verfahren nach Anspruch 7, **dadurch gekennzeichnet, dass** die vorgegebene lokale Wärmekapazität am Ort des Heizelements eingestellt wird, indem bei vorgegebener Fläche des Heizelements die Schichtdicke des Heizelements eingestellt wird und/oder das Material der Schicht des Heizelements geändert wird.

12. Verfahren nach Anspruch 11, **dadurch gekennzeichnet, dass** zusätzlich bei gleichbleibender Fläche des Heizelements das Verhältnis seiner Länge zu seiner Breite verändert wird.

13. Verfahren nach Anspruch 11, **dadurch gekennzeichnet, dass** zur Herstellung des Heizelements mehrere verschiedenartige Widerstandsschichten übereinander aufgebracht werden, deren Schichtdicken und -materialien so ausgewählt werden, dass sich eine vorgegebene lokale Wärmekapazität ergibt.

14. Verfahren nach einem der Ansprüche 1 bis 13, **dadurch gekennzeichnet, dass** das Schmelzelement (11) hergestellt wird, indem zunächst eine elektrisch leitfähige Schicht (2) aufgebracht wird und zumindest über einer Teilfläche der elektrisch leitfähigen Schicht (2) eine Schicht (3) aufgebracht wird, die ein niedrig schmelzendes Metall enthält,
   wobei das niedrig schmelzende Metall beim Schmelzen eine Legierung mit dem Material der elektrisch leitfähigen Schicht (2) derart bilden kann, dass diese zumindest in dem Schmelzbereich aufgelöst wird, so dass ein Stromfluss durch die elektrisch leitfähige Schicht unterbrochen wird.

15. Verfahren nach einem der Ansprüche 1 bis 14, **dadurch gekennzeichnet,**
   **dass** das Schutzbauelement ein Sicherungsbauelement und,
   **dass** ein Substrat aus einem Material geringer Wärmeleitfähigkeit verwendet wird, wobei das Substratmaterial zumindest in dem Bereich unter und zwischen dem Heizelement und dem Schmelzelement eine hohe spezifische Wärmekapazität aufweist.

16. Verfahren nach Anspruch 15, **dadurch gekennzeichnet, dass** als Substratmaterial eine Glaskeramik verwendet wird.

17. Verfahren nach Anspruch 15 oder 16, **dadurch gekennzeichnet, dass** das Sicherungsbauelement als SMD-Bauelement ausgebildet wird.

**18.** Verfahren nach einem der Ansprüche 1 bis 14, **dadurch gekennzeichnet,**
dass das Schutzbauelement ein Sicherungswiderstand (RCP) ist,
dass ein Substrat aus einem Material guter Wärmeleitung bereitgestellt wird, und
dass das Heizelement so dimensioniert wird, dass es zwischen seinen Anschlüssen einen vorgegebenen elektrischen Widerstand aufweist.

**19.** Verfahren nach Anspruch 18, **dadurch gekennzeichnet,**
dass die Schicht des Heizelements und die Schichten des Schmelzelements so ausgebildet werden, dass der elektrische Widerstand des Heizelements wesentlich größer als der des Schmelzelements ist, und
dass das Heizelement und das Schmelzelement elektrisch in Reihe geschaltet werden, so dass die elektrischen Eigenschaften des Sicherungswiderstands im wesentlichen von denen des Heizelements bestimmt werden.

**Claims**

**1.** A method of manufacturing a protective component with a fusible element (11) and a heating element (10), which are mounted in the form of layer components on the surface of a substrate (1), wherein the fusible element (11) is so constructed that a current flow between its connections is interrupted when the fusible element is heated above a predetermined temperature for a predetermined period of time, at least in a melting region, wherein the fusible element (11) and the heating element (10) are so arranged on the substrate (1) that heat produced by the heating element is transported to the fusible element and the current flow through the fusible element is interrupted when the current flow through the heating element exceeds a threshold value for a predetermined period of time, wherein in order to produce connections to the heating element (10) and the fusible element (11) a conductive layer (5) is so applied to the substrate (1) and structured that the heating element (10) and the fusible element (11) are electrically connected in series, **characterised in that** the heating element (10) is arranged at a predetermined spacing adjacent the fusible element (11) and, at at least one predetermined location between the heating element (10) and the fusible element (11), a predetermined local thermal capacity (20), which stores a proportion of the heat propagating from the heating element to the fusible element, is set by adjusting the layout, the layer thickness and the layer material of an additional thermal storage layer arranged between the heating element and the fusible element with a higher specific thermal capacity with respect to the substrate so that, at least approximately, a defined time characteristic of the thermal transfer from the heating element to the fusible element is produced.

**2.** A method as claimed in Claim 1, **characterised in that** the predetermined local thermal capacity is set at the location of the heating element by applying the additional thermal storage layer (6) with a predetermined thickness with a predetermined dimensioning of the heating element beneath the layer (4).

**3.** A method as claimed in Claim 1, **characterised in that** the predetermined local thermal capacity is set at the location of the heating element by applying the additional thermal storage layer (6), with a predetermined dimensioning of the heating element above the layer (4) of the heating element.

**4.** A method as claimed in Claim 2 or 3, **characterised in that** the additional thermal storage layer (6) is electrically conductive and that an electric insulator layer is applied between the thermal storage layer and the resistive layer of the heating element.

**5.** A method as claimed in Claim 2 or 3, **characterised in that** the additional thermal storage layer is applied over the entire area of the substrate.

**6.** A method as claimed in Claim 1, **characterised in that** the predetermined local thermal capacity (20) is set by applying the additional thermal storage layer (19) at at least one predetermined location between the heating element and the fusible element.

**7.** A method of manufacturing a protective component with a fusible element (11) and a heating element (10), which are applied in the form of layer components to the surface of the substrate (1) wherein the fusible element (11) is so constructed that a current flow between its connections is interrupted when the fusible element is heated above a predetermined temperature for a predetermined period of time, at least in a melting region, wherein the fusible element (11) and the heating element (10) are so arranged on the substrate (1) that heat produced by the heating element is transported to the fusible element and the current flow through the fusible element is interrupted when the current flow through the heating element exceeds a threshold value for a predetermined period of time, wherein in order to produce connections to the heating element (10) and the fusible element (11) a conductive layer (5) is so applied to the substrate (1) and structured that the heating element (10) and the fusible element (11) are electrically connected in series, **characterised in that** the heating element (10) is arranged at a predetermined spacing adjacent the fusible element (11) and a predetermined local thermal capacity (13), which stores a portion of the heat propagating from the heating element to the fusible element, is set at the heating element by adjusting the layout, the layer thickness and the layer material of the layer of the heating element so that the layer of the heating element affords the predetermined local thermal capacity with a predetermined electrical resistance so that, at least approximately, a defined time characteristic of the thermal transfer from the heating element to the fusible element is produced.

8. A method as claimed in Claim 7, **characterised in that** the predetermined local thermal capacity is set at the location of the heating element by adjusting the area ($A_A$; $A_B$) of the heating element (10) with a predetermined layer material and a predetermined layer thickness of the heating element.

9. A method as claimed in Claim 7, **characterised in that** a rectangular heating element is formed and that the area of the heating element is adjusted by increasing or reducing the length (1) and the width (b) of the heating element by the same factor.

10. A method as claimed in Claim 7, **characterised in that** a rectangular heating element is formed and that the area of the heating element is adjusted by altering only its length (1), whereby a constant cross-section is produced for the current flow.

11. A method as claimed in Claim 7, **characterised in that** the predetermined local thermal capacity is set at the location of the heating element by adjusting the layer thickness of the heating element, with a predetermined area of the heating element, and/or altering the material of the layer of the heating element.

12. A method as claimed in Claim 11, **characterised in that**, with a constant area of the heating element, the ratio of its length to its width is additionally altered.

13. A method as claimed in Claim 11, **characterised in that**, for the purpose of producing the heating element, a plurality of different types of resistive layers are applied above one another, the layer thicknesses and materials of which are so selected that a predetermined local thermal capacity is produced.

14. A method as claimed in one of Claims 1 to 13, **characterised in that** the fusible element (11) is produced by firstly applying an electrically conductive layer (2) and applying a layer (3) over at least a proportion of the area of the electrically conductive layer (2), which contains a low melting point metal, wherein the low melting point metal can form an alloy with the material of the electrically conductive layer (2), when it melts, so that it breaks up, at least in the melting region, so that a current flow through the electrically conductive layer is interrupted.

15. A method as claimed in one of Claims 1 to 14, **characterised in that** the protective component is a fuse component and that a substrate of a material of low thermal conductivity is used, wherein the substrate material has a high specific thermal capacity, at least in the region beneath and between the heating element and the fusible element.

16. A method as claimed in Claim 15, **characterised in that** a glass ceramic material is used as the substrate material.

17. A method as claimed in Claim 15 or 16, **characterised in that** the fuse component is formed in the form of an SMD component.

18. A method as claimed in one of Claims 1 to 14, **characterised in that** the protective component is a current-limiting resistance (RCP), that a substrate of a material with good thermal conduction is provided and that the heating element is so dimensioned that it has a predetermined electrical resistance between its connections.

19. A method as claimed in Claim 18, **characterised in that** the layer of the heating element and the layers of the fusible element are so constructed that the electrical resistance of the heating element is substantially larger than that of the fusible element and that the heating element and the fusible element are electrically connected in series so that the electrical characteristics of the current-limiting resistance are substantially determined by those of the heating element.

**Revendications**

1. Procédé de fabrication d'un composant de protection avec un élément fusible (11) et un élément chauffant (10), qui sont appliqués sous la forme de composants stratifiés sur la face supérieure d'un substrat (1),
dans lequel l'élément fusible (11) est conçu de manière qu'un flux de courant entre ses connexions soit interrompu lorsque l'élément fusible est chauffé au moins dans une plage de fusion sur une période de temps prédéfinie au-dessus d'une température prédéfinie,
dans lequel l'élément fusible (11) et l'élément chauffant (10) sont agencés sur le substrat (1) de sorte que la chaleur produite par l'élément chauffant soit transférée à l'élément fusible et que le flux de courant passant à travers l'élément fusible soit interrompu lorsque le flux de courant passant à travers l'élément chauffant dépasse une valeur de seuil sur une période de temps prédéterminée,

dans lequel, pour établir des connexions avec l'élément chauffant (10) et l'élément fusible (11), on applique et on structure sur le substrat une couche conductrice (5) de sorte que l'élément chauffant (10) et l'élément fusible (11) soient montés électriquement en série, **caractérisé en ce que**

l'élément chauffant (10) est agencé à une distance prédéfinie à côté de l'élément fusible (11) et on ajuste en au moins un emplacement prédéfini entre l'élément chauffant (10) et l'élément fusible (11) une capacité thermique locale prédéfinie (20), qui accumule une partie de la chaleur se diffusant de l'élément chauffant vers l'élément fusible en ajustant la disposition, l'épaisseur et le matériau d'une couche d'accumulation thermique agencée entre l'élément chauffant et l'élément fusible avec une capacité thermique spécifique plus élevée par rapport au substrat, de sorte que l'on obtienne au moins approximativement un comportement défini dans le temps de la transition thermique de l'élément chauffant à l'élément fusible.

2. Procédé selon la revendication 1, **caractérisé en ce que** la capacité thermique locale prédéfinie est ajustée à l'emplacement de l'élément chauffant en appliquant, pour un dimensionnement prédéfini de l'élément chauffant, sous la couche (4) de l'élément chauffant, la couche d'accumulation thermique supplémentaire (6) d'une épaisseur prédéfinie.

3. Procédé selon la revendication 1, **caractérisé en ce que** l'on ajuste la capacité thermique locale prédéfinie à l'emplacement de l'élément chauffant en appliquant, pour un dimensionnement prédéfini de l'élément chauffant, sur la couche (4) de l'élément chauffant, la couche d'accumulation thermique supplémentaire (6).

4. Procédé selon la revendication 2 ou 3, **caractérisé en ce que** la couche d'accumulation thermique supplémentaire (8) est électriquement conductrice et **en ce qu'**une couche isolante électrique est appliquée entre la couche d'accumulation thermique et la couche de résistance de l'élément chauffant.

5. Procédé selon la revendication 2 ou 3, **caractérisé en ce que** la couche d'accumulation thermique supplémentaire est appliquée sur toute la surface du substrat.

6. Procédé selon la revendication 1, **caractérisé en ce que** l'on ajuste la capacité thermique locale prédéfinie (20) en appliquant, en au moins un emplacement prédéfini, la couche d'accumulation thermique supplémentaire (19) entre l'élément chauffant et l'élément fusible.

7. Procédé de fabrication d'un composant de protection pourvu d'un élément fusible (11) et d'un élément chauffant (10), qui sont appliqués sous la forme de composants stratifiés sur la face supérieure d'un substrat (1),

dans lequel l'élément fusible (11) se présente de sorte qu'un flux de courant soit interrompu entre ses connexions lorsque l'élément fusible est chauffé au moins dans une plage de fusion sur une période de temps prédéfinie au-dessus d'une température prédéfinie,

dans lequel l'élément fusible (11) et l'élément chauffant (10) sont agencés sur le substrat (1) de sorte que la chaleur produite par l'élément chauffant soit transférée à l'élément fusible et que le flux de courant à travers l'élément fusible soit interrompu lorsque le flux de courant passant à travers l'élément chauffant dépasse une valeur de seuil sur une période de temps prédéfinie,

dans lequel, pour établir des connexions avec l'élément chauffant (10) et avec l'élément fusible (11), on applique et on structure une couche conductrice (5) sur le substrat de sorte que l'élément chauffant (10) et l'élément fusible (11) soient montés électriquement en série, **caractérisé en ce que**

l'élément chauffant (10) est agencé à une distance prédéfinie à côté de l'élément fusible (11) et on ajuste, sur l'élément chauffant, une capacité thermique locale prédéfinie (13) qui accumule une partie de la chaleur se diffusant de l'élément chauffant à l'élément fusible en ajustant la disposition, l'épaisseur et le matériau de la couche de l'élément chauffant de sorte que la couche de l'élément chauffant présente la capacité thermique locale prédéfinie à une résistance électrique prédéfinie,

de sorte que l'on obtienne au moins approximativement un comportement défini dans le temps de la transition thermique de l'élément chauffant à l'élément fusible.

8. Procédé selon la revendication 7, **caractérisé en ce que** l'on ajuste la capacité thermique locale prédéfinie à l'emplacement de l'élément chauffant en ajustant la surface (AA ; AB) de l'élément chauffant (10) pour un matériau de couche prédéfini et une épaisseur de couche prédéfinie.

9. Procédé selon la revendication 1, **caractérisé en ce qu'**on forme un élément chauffant rectangulaire et **en ce que** l'on ajuste la surface de l'élément chauffant en augmentant ou en réduisant du même facteur la longueur (1) et la largeur (b) de l'élément chauffant.

10. Procédé selon la revendication 7, **caractérisé en ce que** l'on forme un élément chauffant rectangulaire et **en ce que** l'on ajuste la surface de l'élément chauffant en modifiant uniquement sa longueur (1) de manière à obtenir une section transversale constante pour le flux de courant.

11. Procédé selon la revendication 7, **caractérisé en ce que** l'on ajuste la capacité thermique locale prédéfinie à l'emplacement de l'élément chauffant en ajustant, pour une surface prédéfinie de l'élément chauffant, l'épaisseur de couche de l'élément chauffant et/ou en changeant le matériau de la couche de l'élément chauffant.

12. Procédé selon la revendication 11, **caractérisé en ce que** l'on modifie en plus, à surface constante de l'élément chauffant, le rapport de sa longueur à sa largeur.

13. Procédé selon la revendication 11, **caractérisé en ce que**, pour fabriquer l'élément chauffant, on applique plusieurs couches de résistance de différents types l'une sur l'autre et on en choisit les épaisseurs et les matériaux de manière à obtenir une capacité thermique locale prédéfinie.

14. Procédé selon l'une quelconque des revendications 1 à 13, **caractérisé en ce que** l'élément fusible (11) est fabriqué en appliquant d'abord une couche électriquement conductrice (2) et, au moins sur une surface partielle de la couche électriquement conductrice (2), une couche (3) qui contient un métal à faible point de fusion, dans lequel le métal à faible point de fusion peut former par fusion un alliage avec le matériau de la couche électriquement conductrice (2) de sorte que celle-ci soit dissoute au moins dans la plage de fusion de manière qu'un flux de courant soit interrompu par la couche électriquement conductrice.

15. Procédé selon l'une quelconque des revendications 1 à 14, **caractérisé en ce que** le composant de protection est un composant de sécurité et **en ce que** l'on utilise un substrat constitué d'un matériau de faible conductibilité, le matériau formant substrat présentant, au moins dans la zone en dessous et entre l'élément chauffant et l'élément fusible, une capacité thermique spécifique élevée.

16. Procédé selon la revendication 15, **caractérisé en ce que** l'on utilise un matériau vitrocéramique comme matériau de substrat.

17. Procédé selon la revendication 15 ou 16, **caractérisé en ce que** le composant de sécurité se présente sous la forme d'un composant SMD.

18. Procédé selon l'une quelconque des revendications 1 à 14, **caractérisé en ce que**

le composant de protection est une résistance de sécurité (RCP),
l'on fabrique un substrat à partir d'un matériau de bonne conductibilité thermique, et
l'élément chauffant est dimensionné de sorte qu'il présente entre ses connexions une résistance électrique prédéfinie.

19. Procédé selon la revendication 18, **caractérisé en ce que**
la couche de l'élément chauffant et les couches de l'élément fusible se présentent de sorte que la résistance électrique de l'élément chauffant soit sensiblement supérieure à celle de l'élément fusible, et l'élément chauffant et l'élément fusible sont montés électriquement en série de sorte que les propriétés électriques de la résistance de sécurité soient sensiblement déterminées par celles de l'élément chauffant.

Fig. 1

FIG. 2A

FIG.2B

FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19704097 A1
- EP 0715328 B1
- EP 0188695 A1